# EUROPEAN PATENT APPLICATION

(11) **EP 4 517 974 A1**
(43) Date of publication of application: **05.03.2025**
(21) Application number: 22952518.3
(22) Date of filing: 29.07.2022
(51) Int. Cl.: H01M 50/244, H01M 50/249, H01M 50/258, H01M 10/613, H01M 10/6556

(54) **BOX BODY OF BATTERY, BATTERY, AND ELECTRIC APPARATUS**

(71) Applicant: Contemporary Amperex Technology (Hong Kong) Limited, Central, Central And Western District (HK)
(72) Inventor: YAO, Pengcheng, Ningde, Fujian 352100 (CN); XUE, Danyue, Ningde, Fujian 352100 (CN); WANG, Peng, Ningde, Fujian 352100 (CN); CHEN, Xingdi, Ningde, Fujian 352100 (CN)
(74) Representative: Gong, Jinping
(86) International application number: PCT/CN2022/109120
(87) International publication number: WO 2024/021071

(57) **Abstract**

The application provides a case of battery, a battery and an electric device. The case of battery includes a base plate and a plurality of side beams. The plurality of side beams are connected to the base plate and enclosed together with the base plate to form an accommodation space. Wherein at least one of the side beams includes a beam body and a protrusion protruding from a surface of the beam body facing towards the accommodation space. By providing the protrusion facing towards the accommodation space, the application increases rigidity of the side beams of the case, reduces amplitude of the case in shaking, and thereby reduces and even eliminates a relative displacement between the case and the battery cell to enhance safety of use of the battery.

## Description

### TECHNICAL FIELD

The application relates to the field of battery, and in particular to a case of battery, a battery and an electric device.

### BACKGROUND

Battery cells are widely used in electronic equipments such as mobile phones, laptop computers, electric bicycles, electric automobiles, electric aircrafts, electric ships, electric toy cars, electric toy ships, electric toy planes, and electric tools etc.

In development of the battery technology, how to enhance safety of use of the battery cells is a development direction in the battery technology.

### SUMMARY

The application provides a case of battery, a battery and an electric device, which can enhance safety of use of the battery cells.

In a first aspect, the embodiments of the application provide a case of battery including a base plate and a plurality of side beams. The plurality of side beams are connected to the base plate and enclosed together with the base plate to form an accommodation space, wherein at least one of the side beams includes a beam body and a protrusion protruding from a surface of the beam body facing towards the accommodation space.

In the technical solution described above, the protrusion facing towards the accommodation space is provided to increases rigidity of the side beams of the case, reduce amplitude of the case in shaking, and thereby reduce and even eliminate a relative displacement between the case and the battery cell to enhance safety of use of the battery.

In some embodiments, the plurality of side beams include two first side beams arranged opposite in a first direction and two second side beams arranged opposite in a second direction, the two first side beams and the two second side beams are arranged alternately and connected end to end, at least one of the second side beams includes the beam body and the protrusion, and the first direction intersects with the second direction.

In the technical solution described above, the two first side beams and the two second side beams are enclosed to form a quadrangular accommodation space in order to facilitate processing and manufacturing.

In some embodiments, each of the two second side beams includes the beam body and the protrusion.

In the technical solution described above, each of the two side beams includes the protrusion, so that not only the rigidity of the case is significantly increased and the amplitude of the case is reduced, but also the battery cell may limit the position of the case in the second direction through the two protrusions to further reduce the amplitude of the case in vibration and enhance safety of use of the battery.

In some embodiments, a spacing between the two first side beams is greater than or equal to a spacing between the two second side beams.

In the technical solution described above, the spacing between the two first side beams is greater than or equal to the spacing between the two second side beams, and correspondingly, the size of the battery cell in the first direction is greater than the size in the second direction. Therefore, in the case that the second side beam includes the protrusion, the size of the protrusion may be greater than that in the case that the first side beam includes the protrusion, so that the rigidity of the case may be stronger.

In some embodiments, the maximum size of the protrusion in the second direction is 2mm-100mm.

In the technical solution described above, the maximum size of the protrusion in the second direction is limited to be greater than or equal to 2mm, so as to meet the rigidity requirement of the case, reduce the amplitude of the case in shaking, and enhance safety of use of the battery. The size of the protrusion in the second direction is limited to be less than or equal to 100mm, and the size of the protrusion is controlled so as to reduce waste of the internal space of the battery, reduce the weight of the battery, and enhance the energy density of the battery.

In some embodiments, the maximum size of the protrusion in the second direction is 10mm-30mm.

In the technical solution described above, the maximum size of the protrusion in the second direction is limited to be greater than or equal to 10mm and less than or equal to 30mm. After a plurality of tests and analyses, the inventor concludes that, by limiting the maximum size of the protrusion in the second direction to this range, the safety of use of the battery and the energy density of the battery may be balanced better, that is, the safety of use of the battery is higher and the energy density of the battery is larger.

In some embodiments, the maximum size of the protrusion in the second direction is H, the weight of the battery is M, and H and M satisfy: 0.002mm/kg≤H/M≤2mm/kg.

In the technical solution described above, the value of H/M is limited to be greater than or equal to 0.002mm/kg, so as to meet the rigidity requirement of the battery, reduce the amplitude of the case in shaking, and enhance safety of use of the battery. The value of H/M is limited to be less than or equal to 2mm/kg, so as to avoid the protrusion occupying too much space and having a too large mass, reduce the waste of the internal space of the battery, increase the space utilization rate, and enhance the energy density of the battery.

In some embodiments, H and M satisfy: 0.01 mm/kg≤H/M≤0.3mm/kg.

In the technical solution described above, by limiting the value of H/M to this range, the safety of use and the energy density of the battery may be balanced better, that is, the safety of use of the battery is higher and the energy density is larger.

In some embodiments, the protrusion includes a first plate body, a second plate body and a third plate body, the first plate body and the beam body are arranged spaced apart, the second plate body connects an end of the first plate body away from the base plate and the beam body, and the third plate body connects an end of the first plate body close to the base plate and the beam body.

In the technical solution described above, the protrusion is configured to include the first plate body, the second plate body and the third plate body, that is, the protrusion is of a hollow structure, which is easy to manufacture and does not excessively increase the weight of the case and enhances the energy density of the battery.

In some embodiments, an avoidance space for keeping off a component in the battery is formed alongside the second plate body away from the third plate body.

In the technical solution described above, an avoidance space is formed alongside the second plate body away from the third plate body to keep off a component in the battery, so as to avoid the failure of assembly resulting from an interference with a component in the battery.

In some embodiments, the second plate body is obliquely arranged at the beam body and extends from an end of the first plate body laterally away from the third plate body.

In the technical solution described above, the second plate body is obliquely arranged at the beam body and extends from the end of the first plate body laterally away from the third plate body, so that the enclosed volume of the protrusion and the beam body may be increased to thereby further increase the rigidity of the protrusion and reduce the amplitude of shaking.

In some embodiments, the first plate body extends in a thickness direction of the base plate and abuts with the base plate, and the third plate body is connected to the base plate.

In the technical solution described above, the protrusion and the base plate are connected together, so that the overall rigidity of the case is further enhanced, and the amplitude of shaking is reduced.

In some embodiments, the first plate body, the second plate body, the beam body and the third plate body are enclosed to form an accommodation cavity, and the protrusion further includes a reinforcement rib arranged in the accommodation cavity.

In the technical solution described above, by providing the reinforcement rib in the accommodation cavity, the rigidity of the protrusion may be further enhanced, that is, the rigidity and the weight of the case are enhanced, and the amplitude of shaking is reduced.

In a second aspect, the embodiments of the application further provide a battery including the case of battery described above and a battery cell, and the battery cell is accommodated in an accommodation space.

In some embodiments, the battery further includes a heat management component, an avoidance space is formed alongside the protrusion away from the base plate, and the heat management component is at least partially arranged in the avoidance space.

In the technical solution described above, the avoidance space is formed alongside the protrusion away from the base plate, the protrusion and the heat management component are arranged spaced apart in an arrangement direction of the base plate and the protrusion, the protrusion forms a keep-off effect for the heat management component, and the protrusion is arranged by utilizing the space above the heat management component, so that the space utilization rate inside the case is increased, and the energy density per unit volume of the battery is enhanced.

In some embodiments, the battery cell is arranged spaced apart from the protrusion, and the minimum spacing between the two is 0.5mm-20mm.

In the technical solution described above, the minimum spacing between the battery cell and the protrusion is configured to be greater than or equal to 0.5mm, so that the local stress effect may be alleviated or even avoided, and the diving problem of the battery may be improved. The minimum spacing between the battery cell and the protrusion is configured to be less than or equal to 20mm, so that the waste of the internal space of the battery is reduced, and the energy density of the battery is enhanced.

In some embodiments, a gap between the battery cell and the protrusion is filled with a binder for binding the battery cell and the protrusion.

In the technical solution described above, the gap between the battery cell and the protrusion is filled with a binder, so that the protrusion and the battery cell are connected as a whole, the amplitude of the case in shaking may be significantly reduced, and the safety of use of the battery is enhanced.

In a third aspect, the embodiments of the application further provide an electric device including a battery described above used to provide electrical energy.

### BRIEF DESCRIPTION OF THE DRAWINGS

In order to illustrate the technical solutions in embodiments of the application more clearly, the drawings to be used in the embodiments of the application will be briefly described below. Obviously, the drawings described below are merely some embodiments of the application, and it is also possible for a person of ordinary skill in the art to obtain further drawings from these drawings without creative work.
Fig. 1 is a schematic structural view of a vehicle provided by some embodiments of the application;
Fig. 2 is a schematic explosive structural view of a battery provided by some embodiments of the application;
Fig. 3 is a schematic partial structural view of a case of the battery as shown in Fig. 2;
Fig. 4 is a schematic structural view of a side beam in the case of the battery provided by some embodiments of the application;
Fig. 5 is a top view of the side beam as shown in Fig. 4;
Fig. 6 is a sectional view of the side beam at C-C as shown in Fig. 5.
Fig. 7 is a top view of the battery provided by some embodiments of the application;
Fig. 8 is a sectional view of the battery at A-A as shown in Fig. 7;
Fig. 9 is an enlarged view at B in Fig. 8;

The views are not necessarily plotted in actual proportion in the drawings.

The reference numbers in the detailed embodiments are as follows:
1 vehicle; 2 battery; 3 controller; 4 motor;
5 case; 51 base plate; 52 side beam; 521 beam body; 522 protrusion; 523 first plate body; 524 second plate body; 525 third plate body; 526 avoidance space; 527 accommodation cavity 528 reinforcement rib; 53 first side beam; 54 second side beam; 55 accommodation space; 56 cover plate;
6 heat management component; 7 battery cell;
X first direction; Y second direction.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application. The battery cell may be in the form of a cylinder, a flat body, a cuboid, or other shape, which is not limited by the embodiments of the application.

The battery mentioned in the embodiments of the application refers to a single physical module including one or more battery cells to provide higher voltage and capacity. For example, the battery mentioned in the application may include a battery module or a battery pack or the like. The battery generally includes a case for packaging one or more battery cells. The case can prevent liquid or other foreign matter from affecting the charging or discharging of the battery cell.

The battery cell includes an electrode assembly and electrolyte solution, and the electrode includes a positive electrode sheet, a negative electrode sheet, and a separator. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode coating area and a positive electrode tab connected to the positive electrode coating area. The positive electrode coating area is coated with the positive electrode active material layer, and the positive electrode tab is not coated with the positive electrode active material layer. Taking a lithium ion battery cell as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode coating area and a negative electrode tab connected to the negative electrode coating area. The negative electrode coating area is coated with the negative electrode active material layer, and the negative electrode tab is not coated with the negative electrode active material layer. The material of the negative electrode current collector may be copper, the negative electrode active material layer includes a negative electrode active material, and the negative electrode active material may be carbon, silicon, or the like. The material of the separator may be PP (polypropylene) or PE (polyethylene) or the like.

The battery cell further includes a housing, and an accommodation cavity for accommodating the electrode assembly is formed inside the housing. The housing may protect the electrode assembly from the outside to prevent external foreign matter from affecting charging or discharging of the electrode assembly.

The case of the battery is used to accommodate the battery cell. The bottom of the battery cell is fixed to the case, and a side surface of the battery cell is usually provided with other components such as water cooled pipes, therefore, a spacing will be provided between a side beam of the case and the side surface of the battery cell provided with other components in order to keep off such components.

The inventor has found that after a spacing is provided between the side surface of the battery cell and the side beam, during use of the battery, for example, when shaking occurs, the side beam with a spacing from the battery cell has a greater amplitude, resulting in a greater amplitude of the entire case, as a result of which a relative displacement between the case and the battery cell is liable to occur, leading to a potential safety hazard.

In view of this, the application provides a technical solution that provides the case with a protrusion extending towards the battery cell, so as to increase the rigidity of the case, reduce the amplitude of the case in shaking and enhance safety of use of the battery.

The battery cells described in the embodiments of the application are applicable to batteries and electric devices employing battery cells.

The electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

For ease of description, the following embodiments take a vehicle as an example of the electric device for explanation.

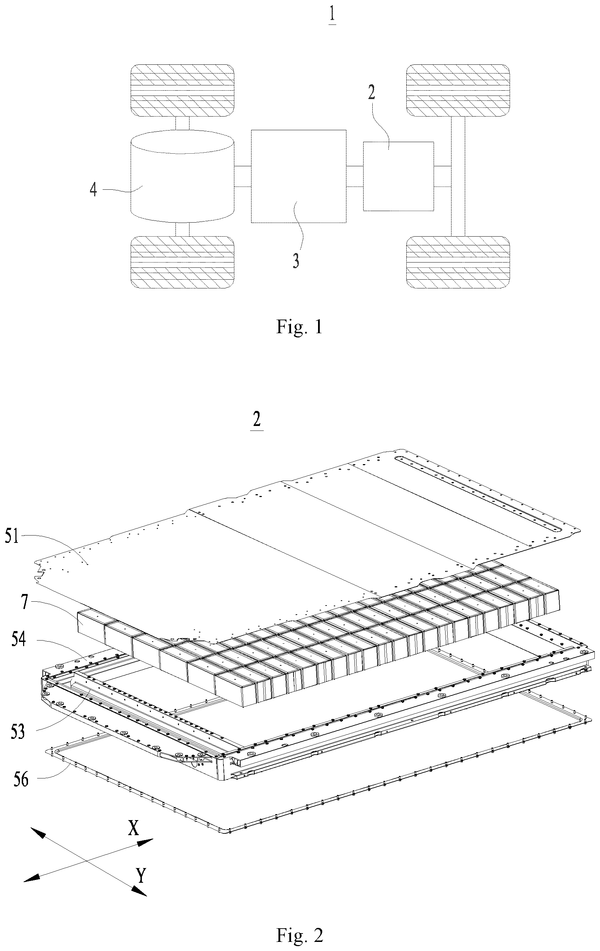

Fig. 1 is a schematic structural view of a vehicle provided by some embodiments of the application.

As shown in Fig. 1, a battery 2 is provided inside the vehicle 1, and the battery 2 may be disposed at a bottom or a head or a rear of the vehicle 1. The battery 2 may be used for powering the vehicle 1. For example, the battery 2 may serve as an operational power source for the vehicle 1.

The vehicle 1 may also include a controller 3 and a motor 4. The controller 3 is used for controlling the battery 2 to power the motor 4, for example, for operational power requirements during start-up, navigation and traveling of the vehicle 1.

In some embodiments of the application, the battery 2 may serve not only as an operational power source for the vehicle 1, but also as a drive power source for the vehicle 1 to provide a drive power for the vehicle 1 instead of or partially instead of fuel or natural gas.

In the battery 2, the amount of battery cell may be single or plural. If there are a plurality of battery cells, the plurality of battery cells may be connected in series or in parallel or in a mixed manner, wherein the mixed manner means that the plurality of battery cells are connected both in series and in parallel.

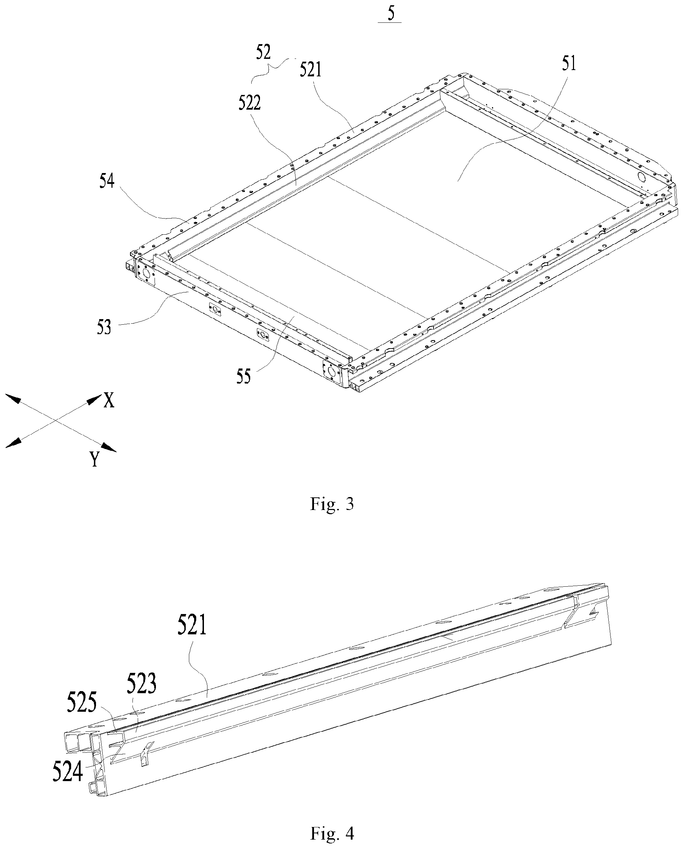

Fig. 2 is a schematic explosive structural view of a battery provided by some embodiments of the application, and Fig. 3 is a schematic partial structural view of a case of the battery as shown in Fig. 2.

As shown in Figs. 2 and 3, the case 5 of the battery 2 of the embodiments of the application includes a base plate 51 and a plurality of side beams 52. The plurality of side beams 52 are connected to the base plate 51 and are enclosed together with the base plate 51 to form an accommodation space 55. Here at least one side beams 52 includes a beam body 521 and a protrusion 522. The protrusion 522 protrudes from a surface of the beam body 521 facing towards the accommodation space 55.

In the embodiments of the application, it is possible that only one of the side beams 52 includes a protrusion 522, and it is also possible that all of the side beams 52 include a protrusion 522 respectively, and it is also possible that some of the plurality of side beams 52 include a protrusion 522 respectively while some other side beams 52 include no protrusion 522.

In the embodiments of the application, the protrusion 522 may be of a solid structure or a hollow structure, which is not limited excessively in the application.

In the embodiments of the application, the shape of the protrusion 522 is not limited, and may be a strip shape, a block shape, or other shapes. Meanwhile, in the embodiments of the application, the arrangement of the protrusions 522 is not limited, and the protrusions 522 may be arranged continuously on the beam body 521, or may be arranged spaced apart on the beam body 521.

In the embodiments of the application, the connection manner of the beam body 521 and the protrusion 522 is not limited, and the beam body 521 and the protrusion 522 may be integrally formed, threadedly connected or connected in other manners.

The protrusion 522 facing towards the accommodation space 55 is provided to increase the rigidity of the side beam 52 of the case 5, reduce the amplitude of the case 5 in shaking, and thereby reduce and even eliminate the relative displacement between the case 5 and the battery cell 7 so as to enhance safety of use of the battery 2.

In addition, the protrusion 522 extends towards the accommodation space 55, so that the utilization rate of the space inside the battery 2 can be enhanced as compared with extending outwards. In addition, the protrusion 522 extends towards the accommodation space 55 and the distance between the case 5 and the battery cell 7 is reduced, so that when the battery 2 shakes, the battery cell 7 may limit the position of the case 5 through the protrusion 522 to reduce the amplitude of the case 5 in shaking and further enhance safety of use of the battery 2.

Optionally, the battery cell 7 is located in the accommodation space 55 and bound to the base plate 51, and the protrusion 522 extends towards the battery cell 7.

Since the battery cell 7 is bound to the base plate 51, when the battery 2 shakes, the amplitude of the case 5 is relatively large, and the battery cell 7 with a smaller amplitude is liable to be unglued, thereby causing a safety hazard of the battery 2. By providing the protrusion 522 on the side beam 52, the rigidity of the case 5 is increased, the amplitude of the case 5 is reduced, the ungluing of the battery cell 7 is alleviated or even avoided, and safety of use of the battery 2 is enhanced.

Optionally, the case 5 further includes a cover plate 56. The cover plate 56 is arranged opposite to the base plate 51 and capped to the accommodation space 55 to enclose the battery cell 7.

In some embodiments, the plurality of side beams 52 include two first side beams 53 arranged opposite in the first direction X and two second side beams 54 arranged opposite in the second direction Y. The two first side beams 53 and the two second side beams 54 are arranged alternately and connected end to end. At least one of the second side beams 54 includes a beam body 521 and a protrusion 522. The first direction X intersects with the second direction Y.

The two first side beams 53 and the two second side beams 54 are connected end to end, that is, the first side beams 53 are connected to the ends of the two second side beams 54 at the same side, and the second side beams 54 are connected to the ends of the two first side beams 53 at the same side.

In the embodiments of the application, the connection manner of the first side beam 53 and the second side beam 54 is not limited. For example, the first side beam 53 and the second side beam 54 are connected by screw connection or welding.

Optionally, the first direction X and the second direction Y are perpendicular.

The two first side beams 53 and the two second side beams 54 are enclosed to form a quadrangular accommodation space in order to facilitate processing and manufacturing.

In some embodiments, each of the two second side beams 54 includes a beam body 521 and a protrusion 522.

In the embodiments of the application, whether the protrusions 522 included in the two side beams 52 are of the same structure is not limited, that is, the structures of the two protrusions 522 may be the same or may also be different.

Each of the two side beams 52 includes a protrusion 522, so that not only the rigidity of the case 5 is significantly increased and the amplitude of the case 5 is reduced, but also the battery cell 7 may limit the position of the case 5 in the second direction Y through the two protrusions 522 to further reduce the amplitude of the case 5 in vibration and enhance safety of use of the battery 2.

In some embodiments, the spacing between the two first side beams 53 is greater than or equal to the spacing between the two second side beams 54.

The spacing between the two first side beams 53 is greater than or equal to the spacing between the two second side beams 54, and correspondingly, the size of the battery cell 7 in the first direction X is greater than the size in the second direction Y. Therefore, in the case that the second side beam 54 includes the protrusion 522, the size of the protrusion 522 may be greater than that in the case that the first side beam 53 includes the protrusion 522, so that the rigidity of the case 5 may be stronger.

In some embodiments, the maximum size of the protrusion 522 in the second direction Y is 2mm-100mm.

The maximum size of the protrusion 522 in the second direction Y may be measured in various ways, for example, by a vernier caliper.

The inventor has found that if the maximum size of the protrusion 522 in the second direction Y is relatively small, the rigidity of the case 5 is not significantly enhanced, and the safety hazard of the battery 2 is still large. If the maximum size of the protrusion 522 in the second direction Y is too large, the volume occupied by the protrusion 522 is relatively large, thereby resulting in a waste of the internal space of the battery 2 and a lower energy density of the battery 2.

In view of this, the maximum size of the protrusion 522 in the second direction Y is limited to be greater than or equal to 2mm, so as to meet the rigidity requirement of the case 5, reduce the amplitude of the case 5 in shaking, and enhance safety of use of the battery 2. The size of the protrusion 522 in the second direction Y is limited to be less than or equal to 100mm, and the size of the protrusion 522 is controlled so as to reduce waste of the internal space of the battery 2, reduce the weight of the battery 2, and enhance the energy density of the battery 2.

Optionally, the size of the protrusion 522 in the second direction Y may be 2mm, 3mm, 5mm, 8mm, 10mm, 20mm, 30mm, 40mm, 50mm, 60mm, 70mm, 80mm, 90mm or 100mm.

In some embodiments, the maximum size of the protrusion 522 in the second direction Y is 10mm-30mm.

In some embodiments, the maximum size of the protrusion 522 in the second direction Y includes 10mm and 30mm.

The maximum size of the protrusion 522 in the second direction Y is limited to be greater than or equal to 10mm and less than or equal to 30mm. After a plurality of tests and analyses, the inventor concludes that, by limiting the maximum size of the protrusion 522 in the second direction Y to this range, the safety of use of the battery 2 and the energy density of the battery 2 may be balanced better, that is, the safety of use of the battery 2 is higher and the energy density of the battery 2 is larger.

Optionally, the size of the protrusion 522 in the second direction Y may be 10mm, 12mm, 15mm, 18mm, 21mm, 23mm, 25mm, 28mm or 30mm.

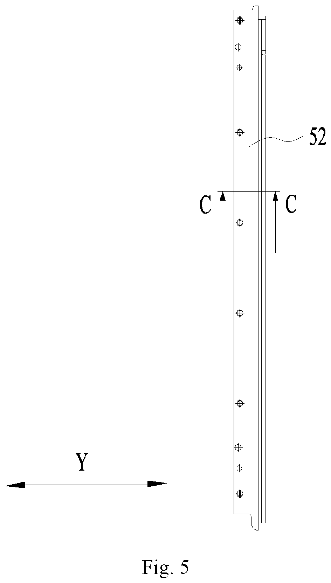

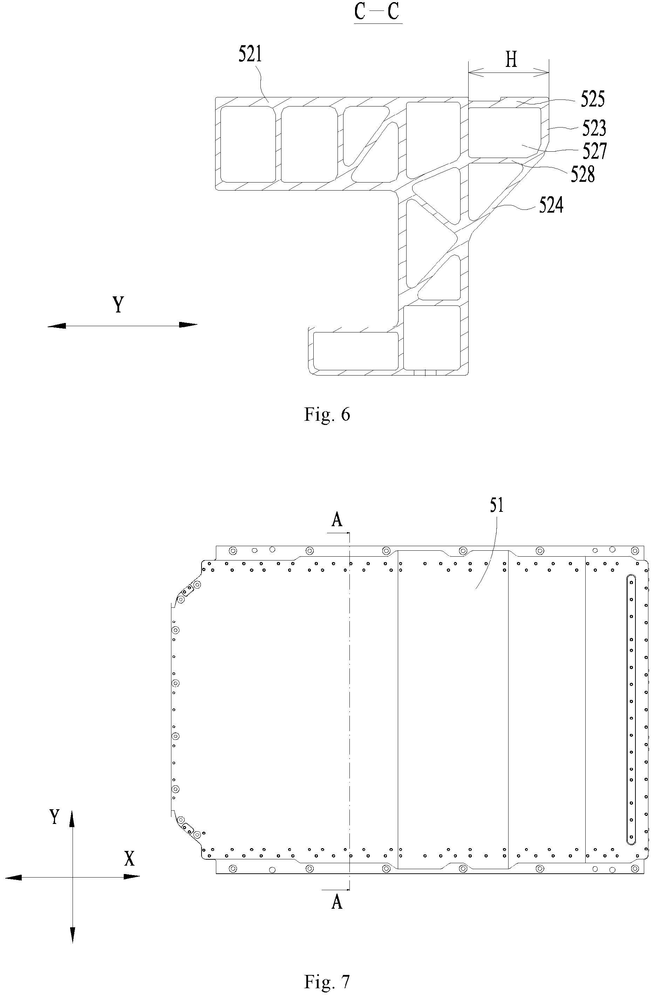

Fig. 4 is a schematic structural view of a side beam in the case of the battery provided by some embodiments of the application; Fig. 5 is a top view of the side beam as shown in Fig. 4; Fig. 6 is a sectional view of the side beam at C-C as shown in Fig. 5.

As shown in Figs. 4-6, the maximum size of the protrusion 522 in the second direction Y is H, the weight of the battery 2 is M, and H and M satisfy: 0.002mm/kg≤H/M≤2mm/kg.

As can be seen from the above, if the maximum size of the protrusion 522 in the second direction Y is relatively small, the rigidity of the case 5 is not significantly enhanced, and the safety hazard of the battery 2 is still large. If the maximum size of the protrusion 522 in the second direction Y is too large, the volume occupied by the protrusion 522 is relatively large, thereby resulting in a waste of the internal space of the battery 2 and a lower energy density of the battery 2. In view of this, the application balances safety of use of the battery 2 and the energy density of the battery 2 by defining the ratio of the maximum size of the protrusion 522 in the second direction Y and the weight of the battery 2.

The larger the value of H/M is, the larger the rigidity of the case 5 is, the smaller the amplitude thereof in shaking is, and the higher the safety of use of the battery 2 is, while the lower the energy density of the battery 2 is. If the value of H/M is too large, it will cause an overdesign, resulting in a relatively low energy density of the battery 2. However, the smaller the value of H/M is, the lower the safety of use of the battery 2 is.

**In** view of this, the value of H/M is limited to be greater than or equal to 0.002mm/kg, so as to meet the rigidity requirement of the battery 2, reduce the amplitude of the case 5 in shaking, and enhance safety of use of the battery 2. The value of H/M is limited to be less than or equal to 2mm/kg, so as to avoid the protrusion 522 occupying too much space and having a too large mass, reduce the waste of the internal space of the battery 2, increase the space utilization rate, and enhance the energy density of the battery 2.

Optionally, the value of H/M may be 0.002mm/kg, 0.003mm/kg, 0.006mm/kg, 0.01mm/kg, 0.1mm/kg, 0.5mm/kg, 0.8mm/kg, 1mm/kg, 1.2mm/kg, 1.4mm/kg, 1.6mm/kg, 1.8mm/kg or 2mm/kg.

In some embodiments, H and M satisfy: 0.01mn/k≤0.3mm/kg.

The value of H/M is limited to be greater than or equal to 0.01mm/kg and less than or equal to 0.3mm/kg. After a plurality of tests and analyses, the inventor concludes that, by limiting the value of H/M to this range, the safety of use and the energy density of the battery 2 may be balanced better, that is, the safety of use of the battery 2 is higher and the energy density is larger.

Optionally, the value of H/M may be 0.01mm/kg, 0.02mm/kg, 0.05mm/kg, 0.08mm/kg, 0.12mm/kg, 0.15mm/kg, 0.17mm/kg, 0.2mm/kg, 0.22mm/kg, 0.25mm/kg, 0.27mm/kg or 0.3mm/kg.

In some embodiments, the protrusion 522 includes a first plate body 523, a second plate body 524 and a third plate body 525. The first plate body 523 and the beam body 521 are arranged spaced apart. The second plate body 524 connects an end of the first plate body 523 away from the base plate 51 and the beam body 521. The third plate body 525 connects an end of the first plate body 523 close to the base plate 51 and the beam body 521.

In the embodiments of the application, the included angle between the first plate body 523 and the second plate body 524, the included angle between the first plate body 523 and the third plate body 525, the included angle between the second plate body 524 and the beam body 521 and the included angle between the third plate body 525 and the beam body 521 are not limited, and each of the above included angles may be an acute angle, an obtuse angle or a right angle.

In the embodiments of the application, the connection manner of the protrusion 522 and the beam body 521 is not limited, and may be welding, integral forming or other connection manner.

The protrusion 522 is configured to include a first plate body 523, a second plate body 524 and a third plate body 525, that is, the protrusion 522 is of a hollow structure, which is easy to manufacture and does not excessively increase the weight of the case 5 and enhances the energy density of the battery 2.

Optionally, the first plate body 523, the second plate body 524 and the third plate body 525 have the same size in the first direction X.

Optionally, each of the first plate body 523, the second plate body 524 and the third plate body 525 is of an elongate plate-like structure with a length direction thereof parallel to the first direction X.

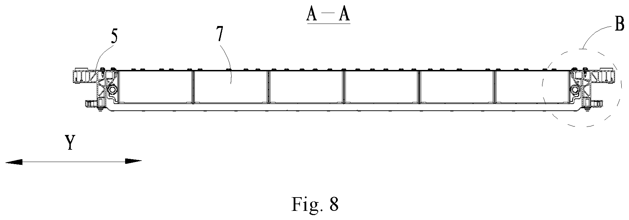

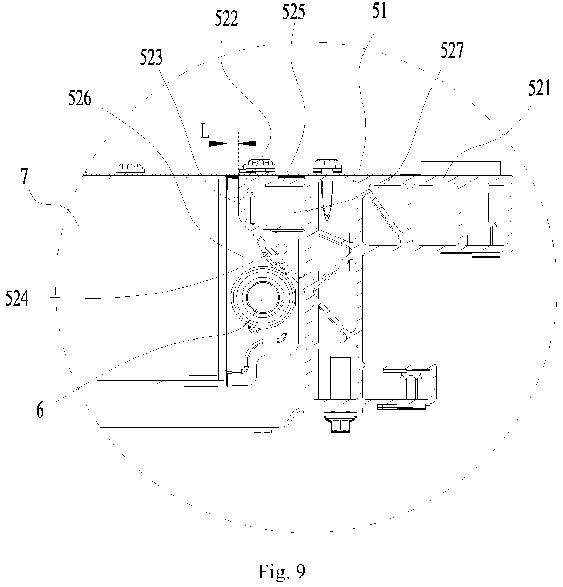

Fig. 7 is a top view of the battery provided by some embodiments of the application, Fig. 8 is a sectional view of the battery at A-A as shown in Fig. 7, and Fig. 9 is an enlarged view at B in Fig. 8.

As shown in Figs. 7-9, in some embodiments, an avoidance space 526 for keeping off a component in the battery 2 is formed alongside the second plate body 524 away from the third plate body 525.

In this embodiment, the avoidance space 526 refers to the space formed between and enclosed by the second plate body 524, the beam body 521 and the battery cell 7.

The avoidance space 526 is formed alongside the second plate body 524 away from the third plate body 525 to keep off a component in the battery 2, so as to avoid the failure of assembly resulting from an interference with the component in the battery 2.

In some embodiments, the angle between the second plate body 524 and the first plate body 523 is an obtuse angle.

In this embodiment, the included angle between the second plate body 524 and the side of the beam body 521 facing towards the base plate 51 is an acute angle.

The included angle between the second plate body 524 and the first plate body 523 is an obtuse angle, that is, the second plate body 524 is obliquely arranged at the beam body 521 and extends from the end of the first plate body 523 laterally away from the third plate body 525, so that the enclosed volume of the protrusion 522 and the beam body 521 may be increased to thereby further increase the rigidity of the protrusion 522 and reduce the amplitude of shaking.

In some embodiments, the first plate body 523 extends in a thickness direction of the base plate 51 and abuts with the base plate 51, and the third plate body 525 is connected to the base plate 51.

In this embodiment, the first plate body 523 is perpendicular to the base plate 51.

Optionally, the third plate body 525 is arranged to abut against the base plate 51.

Optionally, the third plate body 525 is connected to the base plate 51 in a manner of screw connection.

The first plate body 523 abuts with the base plate 51, and the third plate body 525 is connected to the base plate 51, so that the protrusion 522 and the base plate 51 are connected together, thereby further enhancing the overall rigidity of the case 5 and reducing the amplitude of shaking.

In some embodiments, the first plate body 523, the second plate body 524, the beam body 521 and the third plate body 525 are enclosed to form an accommodation cavity 527, and the protrusion 522 further includes a reinforcement rib 528 arranged in the accommodation cavity 527.

In the embodiments of the application, the amount, shape and specific position of the reinforcement rib 528 in the accommodation cavity 527 are not limited. For example, the amount of the reinforcement rib 528 is one, and the reinforcement rib 528 is connected between the second plate body 524 and the beam body 521.

By providing the reinforcement rib 528 in the accommodation cavity 527, the rigidity of the protrusion 522 may be further enhanced, that is, the rigidity and the weight of the case 5 are enhanced, and the amplitude of shaking is reduced.

The embodiments of the application further provide a battery 2 including the case 5 and the battery cell 7 described above, and the battery cell 7 is accommodated in the accommodation space 55.

In some embodiments, the battery 2 further includes a heat management component 6, an avoidance space 526 is formed alongside the protrusion 522 away from the base plate 51, and the heat management component 6 is at least partially arranged in the avoidance space 526.

The heat management component 6 of the embodiments of the application is used for heat exchange of the battery cell 7. For example, the heat management component 6 is a water cooled pipe.

The avoidance space 526 is formed alongside the protrusion 522 away from the base plate 51. The protrusion 522 and the heat management component 6 are arranged spaced apart in an arrangement direction of the base plate 51 and the protrusion 522. The protrusion 522 forms a keep-off effect for the heat management component 6, and the protrusion 522 is arranged by utilizing the space above the heat management component 6, so that the space utilization rate inside the case 5 is increased, and the energy density per unit volume of the battery 2 is enhanced.

In some embodiments, the battery cell 7 is arranged spaced apart from the protrusion 522, and the minimum spacing L between the two is 0.5mm-20mm.

In this embodiment, the range of the spacing between the battery cell 7 and the protrusion 522 includes 0.5mm and 20mm.

The inventor has found that if the spacing between the battery cell 7 and the protrusion 522 is too small, the protrusion 522 in shaking may press the battery cell 7, causing a local stress effect leading to a diving problem of the battery cell 7. If the spacing between the battery cell 7 and the protrusion 522 is too large, then the internal space of the battery 2 is wasted, and the energy density of the battery 2 is lowered.

In view of this, the minimum spacing L between the battery cell 7 and the protrusion 522 is configured to be greater than or equal to 0.5mm, so that the local stress effect may be alleviated or even avoided, and the diving problem of the battery 2 may be improved. The minimum spacing L between the battery cell 7 and the protrusion 522 is configured to be less than or equal to 20mm, so that the waste of the internal space of the battery 2 is reduced, and the energy density of the battery 2 is enhanced.

Optionally, the minimum spacing L between the battery cell 7 and the protrusion 522 is 0.5mm-10mm.

In some embodiments, a gap between the battery cell 7 and the protrusion 522 is filled with a binder for binding the battery cell 7 and the protrusion 522.

Optionally, the battery cell 7 is bound to the first plate body 523.

The binder is filled between the battery cell 7 and the protrusion 522 to bond the battery cell 7 and the protrusion 522, so that the protrusion 522 and the battery cell 7 are connected as a whole, the amplitude of the case 5 in shaking may be significantly reduced, and the safety of use of the battery 2 is enhanced.

The embodiments of the application further provide an electric device including the battery 2 described above used to provide electrical energy.

Referring to Figs. 2-6, the embodiments of the application provide a case 5 of a battery 2. The case 5 includes a base plate 51 and a plurality of side beams 52. A plurality of side beams 52 are connected to the base plate 51 and enclosed together with the base plate 51 to form an accommodation space 55. The plurality of side beams 52 include two first side beams 53 arranged opposite in the first direction X and two second side beams 54 arranged opposite in the second direction Y. The two first side beams 53 and the two second side beams 54 are arranged alternately and connected end to end. The first direction X intersects with the second direction Y. The spacing between the two first side beams 53 is greater than or equal to the spacing between the two second side beams 54. Here each of the two second side beams 54 includes a beam body 521 and a protrusion 522, and the protrusion 522 protrudes from a surface of the beam body 521 facing towards the accommodation space 55.

The maximum size of the protrusion 522 in the second direction Y is 2mm-100mm. The maximum size of the protrusion 522 in the second direction Y is H, the weight of the battery 2 is M, and H and M satisfy: 0.002mm/kg≤H/M≤2mm/kg.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A case of battery, comprising:
a base plate; and
a plurality of side beams connected to the base plate and enclosed together with the base plate to form an accommodation space,
wherein at least one of the side beams comprises a beam body and a protrusion, and the protrusion protrudes from a surface of the beam body facing towards the accommodation space.

2. The case of battery according to claim 1, wherein the plurality of side beams comprise two first side beams arranged opposite in a first direction and two second side beams arranged opposite in a second direction, and the two first side beams and the two second side beams are arranged alternately and connected end to end,
at least one of the second side beams comprises the beam body and the protrusion, and the first direction intersects with the second direction.

3. The case of battery according to claim 2, wherein each of the two second side beams comprises the beam body and the protrusion.

4. The case of battery according to claim 2, wherein a spacing between the two first side beams is greater than or equal to a spacing between the two second side beams.

5. The case of battery according to any of claims 2-4, wherein a maximum size of the protrusion in the second direction is 2mm-100mm.

6. The case of battery according to claim 5, wherein the maximum size of the protrusion in the second direction is 10mm-30mm.

7. The case of battery according to any of claims 2-6, wherein a maximum size of the protrusion in the second direction is H, a weight of the battery is M, and H and M satisfy: 0.002mm/kg≤H/M≤2mm/kg.

8. The case of battery according to claim 7, wherein H and M satisfy: 0.01 mm/kg≤H/M≤0.3mm/kg.

9. The case of battery according to any of claims 1-8, wherein the protrusion comprises a first plate body, a second plate body and a third plate body, the first plate body and the beam body are arranged spaced apart, the second plate body connects an end of the first plate body away from the base plate and the beam body, and the third plate body connects an end of the first plate body close to the base plate and the beam body.

10. The case of battery according to claim 9, wherein an avoidance space for keeping off a component in the battery is formed alongside the second plate body away from the third plate body.

11. The case of battery according to claim 9 or 10, wherein an angle between the second plate body and the first plate body is an obtuse angle.

12. The case of battery according to claim 9, wherein the first plate body extends in a thickness direction of the base plate and abuts with the base plate, and the third plate body is connected to the base plate.

13. The case of the battery according to claim 9, wherein the first plate body, the second plate body, the beam body and the third plate body are enclosed to form an accommodation cavity,
the protrusion further comprises a reinforcement rib arranged in the accommodation cavity.

14. A battery, comprising:
the case according to any of claims 1 to 13; and
a battery cell accommodated in the accommodation space.

15. The battery according to claim 14, further comprises a heat management component, an avoidance space is formed alongside the protrusion away from the base plate, and the heat management component is at least partially arranged in the avoidance space.

16. The battery according to claim 14 or 15, wherein the battery cell is arranged spaced apart from the protrusion, and a minimum spacing between the battery cell and the protrusion is 0.5mm-20mm.

17. The battery according to claim 16, wherein a gap between the battery cell and the protrusion is filled with a binder for binding the battery cell and the protrusion.

18. An electric device comprising a battery according to any of claims 14 to 17 used to provide electrical energy.
